# EUROPEAN PATENT APPLICATION

(11) **EP 2 815 949 A1**
(43) Date of publication of application: **24.12.2014**
(21) Application number: 13172498.1
(22) Date of filing: 18.06.2013
(51) Int. Cl.: B62B 3/14, F16B 5/06

(54) **Accessory for roll container**

(71) Applicant: K. Hartwall Oy AB, 01150 Söderkulla (FI)
(72) Inventor: Kosonen, Juha, 01150 Söderkulla (FI); Järvi, Mikko, 01150 Söderkulla (FI)
(74) Representative: Seppo Laine Oy

(57) **Abstract**

An accessory for roll containers used for transport and storage of boxes, containers and other packages as well as single pieces of goods. The accessory is for a roll container comprising at least a frame (33) and side walls (2) and a container bottom (4) mounted on the frame of said roll container. The accessory comprises at least one planar surface (6,11,12) made of plastic material and includes at least one means for attachment (15) formed of the body of the accessory so that the means for attachment (15) and the accessory are of same piece of material. The attachments means may consist of a tongue (15) or of a cut-out . The accessory may be a trough-like bottom plate or a inner wall inside the container as well as a planar plate outside the container of the with a surface for displaying information.

## Description

### Technical Field

The present invention concerns accessories for roll containers used for transport and storage of boxes, containers and other packages as well as single pieces of goods.

Especially the invention concerns accessories for roll containers for postal services.

The invention also concerns an accessory for providing new functions for the roll container.

### Background

Roll containers and transfer carts are used in storage spaces, docking sites, department stores and in transport operations between storage warehouses and stores, such as milk transport from a dairy to a store and transport of beverages from a brewery to a store. Frequently, roll containers and transfer carts are also used as sales containers for milk products, for example. One field of use is in postal services and various parcel delivery services.

Today, a plurality of different roll container types described below is used having a construction modified from a single basic type into a variety of designs developed for different applications. Descriptions of various types of roll containers can be found in the EN 12674 standard.

A rigid-frame roll container comprises a wheeled base frame to which from 2 to 3 walls are attached serving to keep the goods being transferred in the storage container. The front side of the container is open. Such containers take equal footprint both empty and filled as they cannot be stacked nested.

The open side of the roll container can be provided with one or more gates. Hingedly mounted to the side wall front edge, such a gate or pair of gates may be rotated 270° sideways, that is, parallel to the side wall against the outer side thereof for the duration of the filling/emptying of the container. Both rigid-frame and gated containers may also be provided with intermediate shelves, which may be attached fixedly, detachably or hingedly to the container sides, whereby goods can be loaded on the container that are too fragile to be stacked in several layers.

Even when empty, such rigid-frame storage containers consume a large footprint in the storage room. To be able to collapse empty containers into a smaller space, nestedly stackable containers have been developed. In this type of container, the wheels are attached to the lower edges of the vertical walls, and the side walls are hingedly mounted on the rear wall. The bottom of the container is hingedly mounted at the lower edge of either one side wall or the rear wall, whereby the bottom may be flipped up for store-away. If such a container is provided with gates and intermediate shelves, the gates must be rotated for store-away of the container into the open position and against the outer sides of the container side wall, whereafter the intermediate shelves that are the hingedly mounted on the container walls can be flipped up in the same fashion as the container bottom.

The container bottom may be rotated up into a vertical or almost vertical position and the side walls rotated sideways open, whereby another similarly opened container can be slided into the first opened container. This type of container can thus be stored-away and transferred partially pushed inside each other. This facility offers a store-away arrangement of containers in less space.

The walls of the containers are made of various tube and wire constructions. These are easy and cheap to manufacture and provide a lightweight structure. Of course, a drawback of these is the open spaces between wires in the wire wall that may allow passage of delivered goods that have smaller dimensions than the spaces in the wall. The containers that don't have shelves are not ergonomically optimal as the bottom of the container is at a low level whereby bending or kneeling is required for picking goods from the bottom of the container.

### Summary of Invention

The purpose of invention is to provide an optional accessory by which features of a roll container can be altered.

In a first aspect, the invention relates to a structure that has at least one planar part made of plastic that can be attached to a roll container having at least one wall made of tubes and wires

Another aspect of the invention relates to a structure that can be attached to a roll container to prevent goods from falling through at least one wall.

One aspect of the invention relates to a structure that comprises at least two or more planar surfaces attached to each other.

One aspect of the invention relates to planar surfaces that can be attached to at least one outer wall surface of the container for informational purposes.

According to other aspects and embodiments of the present invention, the invention provides at least one at least partially closed wall for a roll container.

According to one further aspect of the invention, the invention provides an accessory that can be mounted on a standard storage container.

According to one preferred embodiment of the invention, the invention provides an accessory that includes attachment means that are integral to the accessory and made the same material as the accessory.

The invention is based in that the accessory comprises at least one planar surface made of plastic material and includes at least one means for attachment formed of the body of the accessory.

According to one embodiment, the accessory is a single piece of one material comprising the means for attachment. According to one embodiment, the accessory comprises at least two planar surfaces joined through a joint made to the material of the accessory.

According to one embodiment of the invention, the accessory comprises three walls for covering at least three sides of the container.

According to one embodiment of the invention, the accessory comprises one planar surface that includes at least one horizontal joint.

According to one embodiment of the invention, the accessory is a single planar plate having a surface for displaying information and including means for attaching the plate to an outer surface of the container.

The invention provides essential benefits. First, the invention provides a cost efficient way to find new uses for a standard storage container with wire or mesh side walls. As the accessory is made of polymer material i.e. plastic, it has a good durability against tear and wear. The accessory lasts long in use reducing the need for replacement. This provides savings in material and maintenance. The appearance of the container can be enhanced and good durability guarantees that the appearance stays appealing for a long time. Thus, containers equipped with an accessory according to the invention can be used for replacing shop furniture.

The container can be more efficiently used for handling separate single packages without danger of dropping them through the mesh infill. This is greatly needed as more and more goods are purchased through various internet retailers and the goods are delivered by post or through package delivery services. Reliability of the delivery service is increased since fewer packages are damaged or lost by falling from the container.

The accessory can be made of various plastic materials at a low cost and it can be attached to a container rapidly with simple integrated attaching means.

Other objects and features of the invention will become apparent from the following detailed description considered in conjunction with the accompanying drawings. It is to be understood, however, that the drawings are intended solely for purposes of illustration and not as a definition of the limits of the invention, for which reference should be made to the appended claims.

### Description of drawings

Fig. 1 depicts a roll container with two vertical walls.
Fig. 2 shows an accessory according to the invention for forming a floor to a container.
Fig. 3 shows the container of fig. 1 fitted with the floor of fig. 2.
Fig. 4 depicts a container with three vertical walls.
Fig. 5 depicts and accessory according to the invention for covering three walls of a container.
Fig. 6 shows the container of fig. 4 fitted with the accessory of fig. 2.
Fig. 7 shows an embodiment of the invention for forming a door to a container.
Figs. 8 and 9 show two operating positions of the embodiment shown in fig. 7.
Fig. 10 shows an embodiment wherein embodiments of figs. 5 and 7 are combined to a single piece.
Figs 11 and 12 depict the embodiment of fig. 10 mounted on a container in two different operating positions.
Figs. 13 - 22 show various embodiments for means for attachment of the accessories.
Figures 23 - 35 show various embodiments and combinations of embodiments of the invention mounted on containers.

### Description of embodiments

A plastic material is any of a wide range of synthetic or semi-synthetic organic solids that are moldable. Plastics are typically organic polymers of high molecular mass, but they often contain other substances. They are usually synthetic, most commonly derived from petrochemicals, but many are partially natural. One typical plastic that is preferred as a material for carrying out the invention is polypropylene (PP).

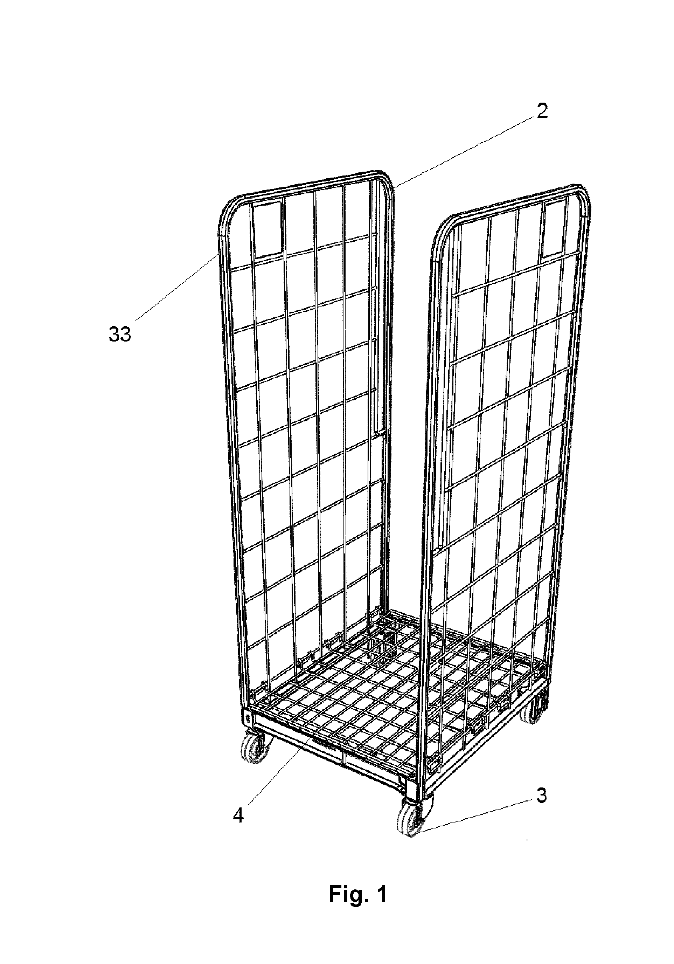

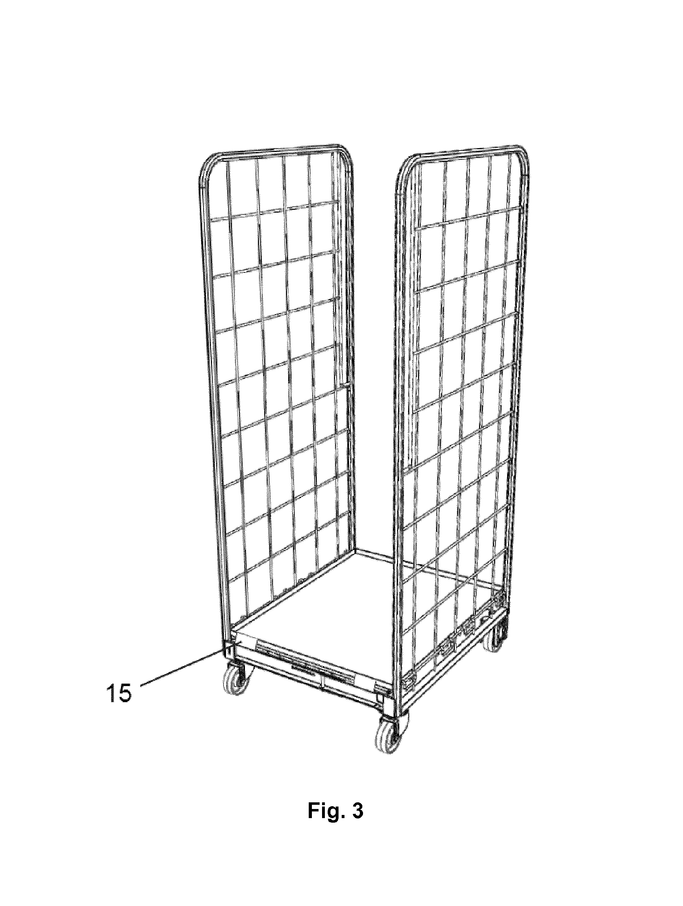

The roll container shown in figures 1 and 3 comprises side walls 2 and a container bottom 4. The side walls 2 as the bottom 4 are mounted on frame of the bottom 4. Each corner of the container bottom frame is equipped with a wheel 3 to facilitate the transfer of the roll container.

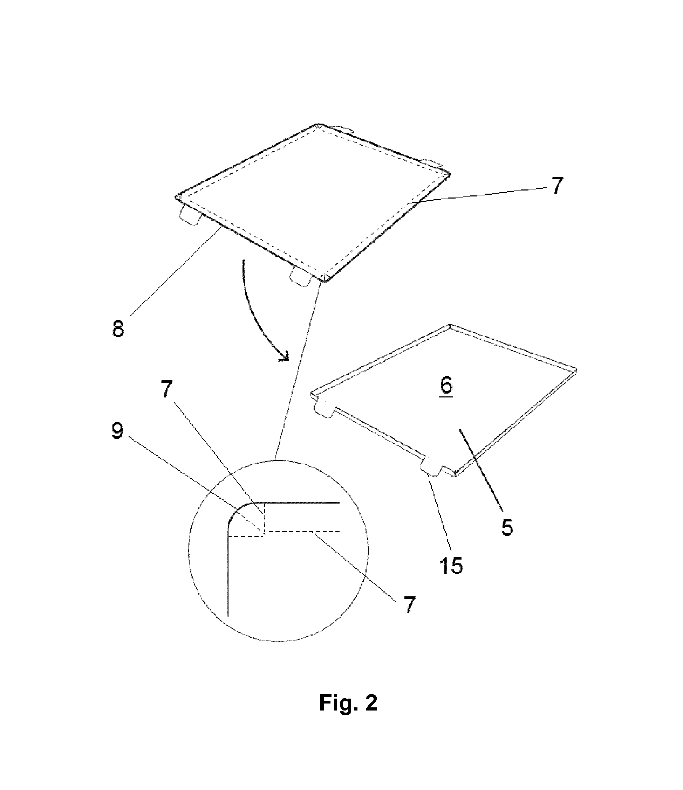

The bottom 4 of the container shown herein is made of wire mesh. If it is necessary to prevent goods or packages falling through the bottom, for example when transporting small goods, a bottom plate 5 according to the invention may be provided and mounted over the wire mesh. One embodiment of the bottom plate 4 is shown in figure 2. It comprises a rectangular planar surface 6 having straight creasing line running parallel to each edge 8 of the planar surface 6. At the edges of the bottom plate 5 the creasing lines 7 cross each other and continue to the edge. The straight angle formed by the crossing creasing lines 7 is halved by an auxiliary creasing line 9. When the edges 8 of the planar surface 6 are bent towards the center of the surface 6, a trough with low walls is formed. As the area of the planar surface between the creasing lines is dimensioned to correspond with the bottom 4 of the roll container, this trough can be placed on the bottom 4 between the side walls 2. The side walls 2 lock the bottom plate 5 on place in sideways direction towards the walls 2. For attaching the bottom plate 5 in direction to the open sides of the container, two opposite edges 8 of the bottom plate 5 are provided with two tongues 15 extending from the edge 8. When the bottom plate is placed on the bottom of the container, these tongues 15 can be pushed between the frame and the mesh of the bottom 4, thereby locking the bottom plate 5 securely on place.

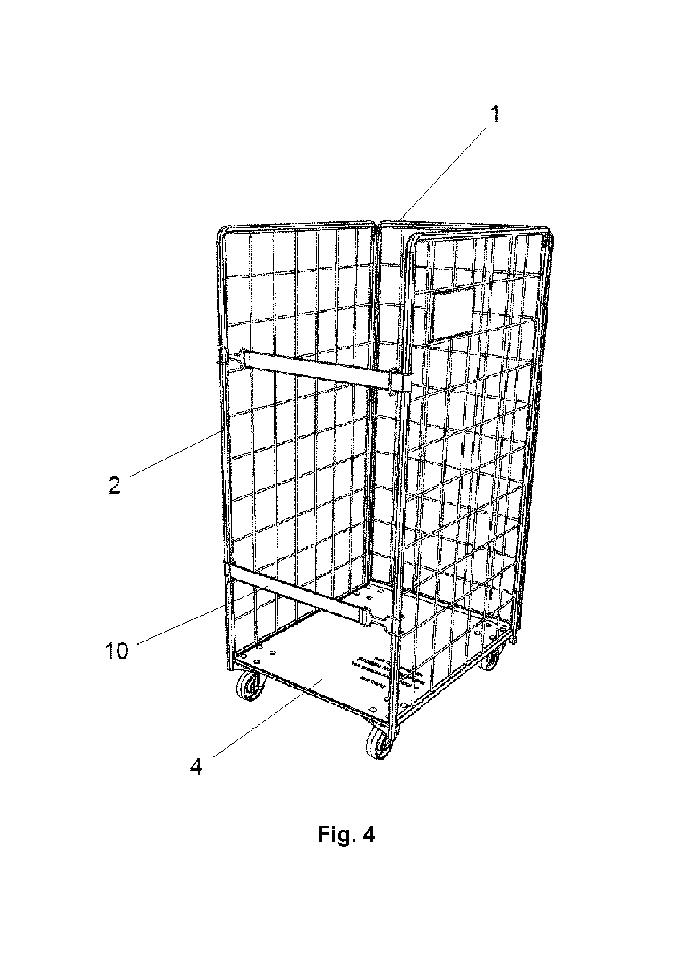

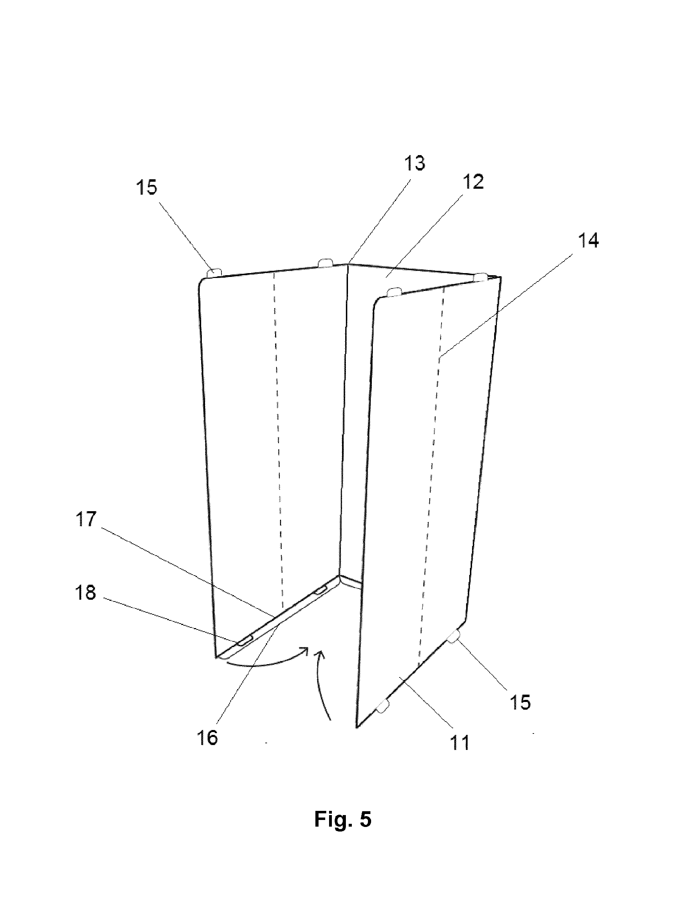

Figure 4 shows a roll container having also a back wall 1 and a solid plate bottom. The side walls 2 are secured sideways by elastic straps 10 that can be detachably attached to the frame tubes of the walls 2 over the open side ("door") of the roll container. The accessory shown in figure 5 comprises three planar quadrangular wall planes, two side wall planes 11 and a back wall plane 12. The side wall planes 11 are attached to the opposite edges of the back wall plane 12 through joints 13. These joints 13 are preferably made by creasing, but alternatively perforations or other methods for forming a fold line for the joint may be used in this embodiment as well as in others. Each of the side wall planes 11 comprise a central vertical fold line 14 and two tongues 15 extending from the top and bottom edge of the side wall planes 11. The bottom edges of the side and back walls 11, 12 comprises edge strips 16 that are formed from the material of the wall planes by a straight joint 17, also herein formed by creasing or other suitable method. The tongues 15 of the bottom edges are formed from the material of the edge strips 16 by cuts 18.

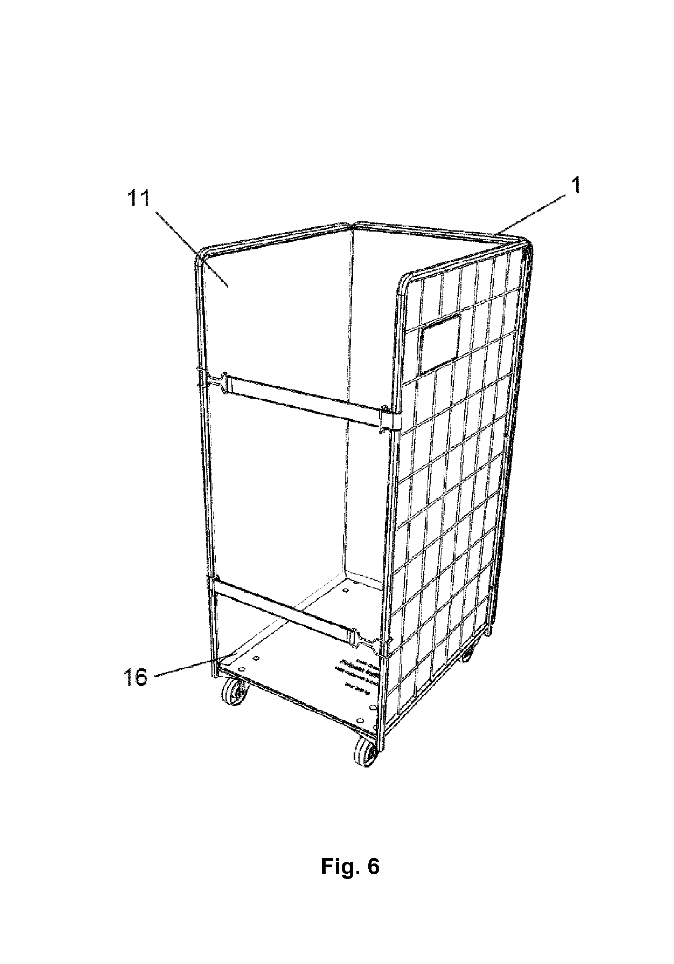

This accessory is preferably delivered to customers in a folded position wherein the side wall planes 11 are folded at fold lines in two and these folded planes are folded over the back wall plane 12 so that they cover the back wall. When the accessory is installed on a container, the back wall plane 12 is pushed in the container and against the back wall 1 of the container, whereafter the side wall planes 11 are easy to fold open against the side walls 11. The edge strips 16 are folded inwards over the bottom 4 of the container as shown in fig. 6 and the tongues 15 are folded over the edge of the bottom 4 of the roll container. The tongues on the upper edges of the side wall planes 11 may be folded under the frame of the side walls 2 or over it. In this position the accessory is locked in place and covers side and back walls of the roll container effectively preventing falling of any goods through these walls 1, 2.

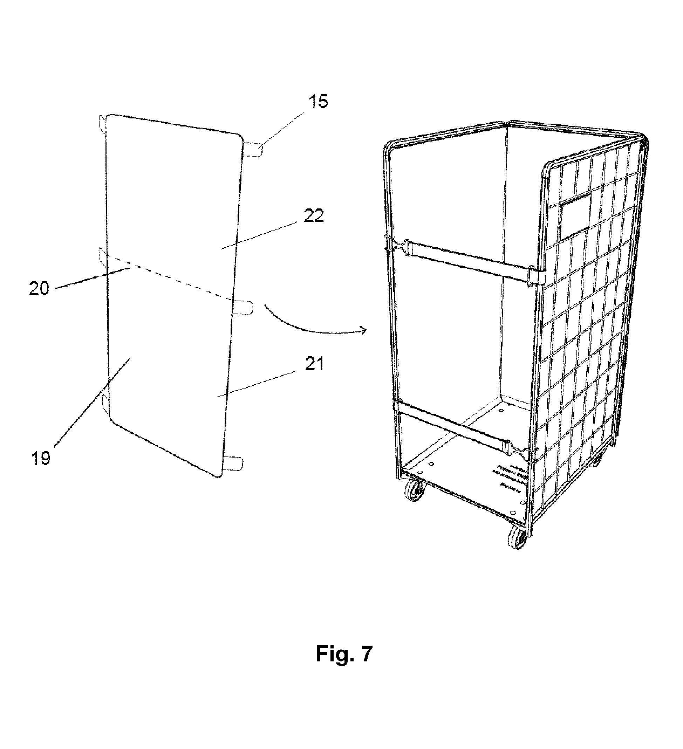

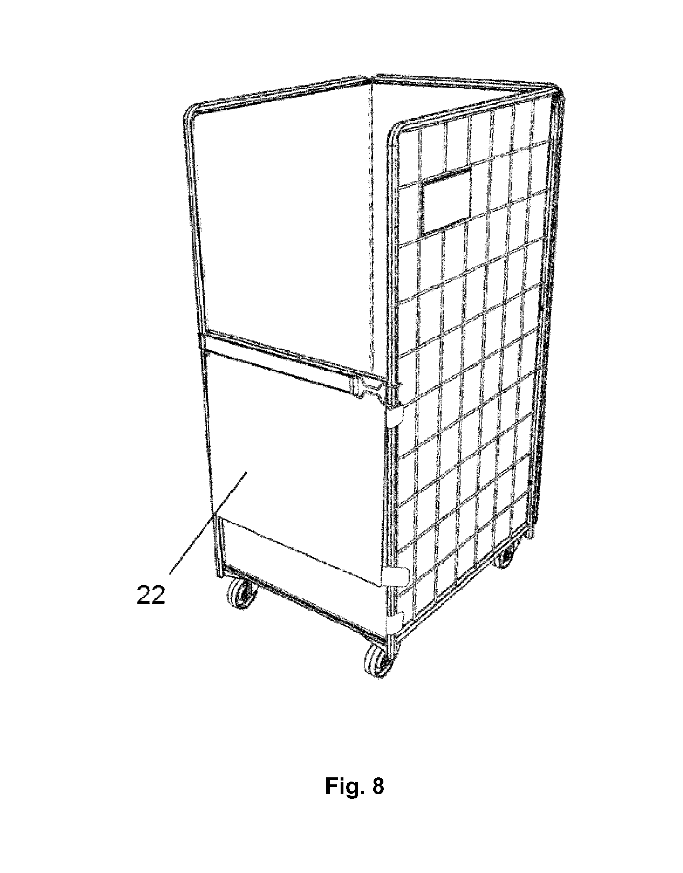

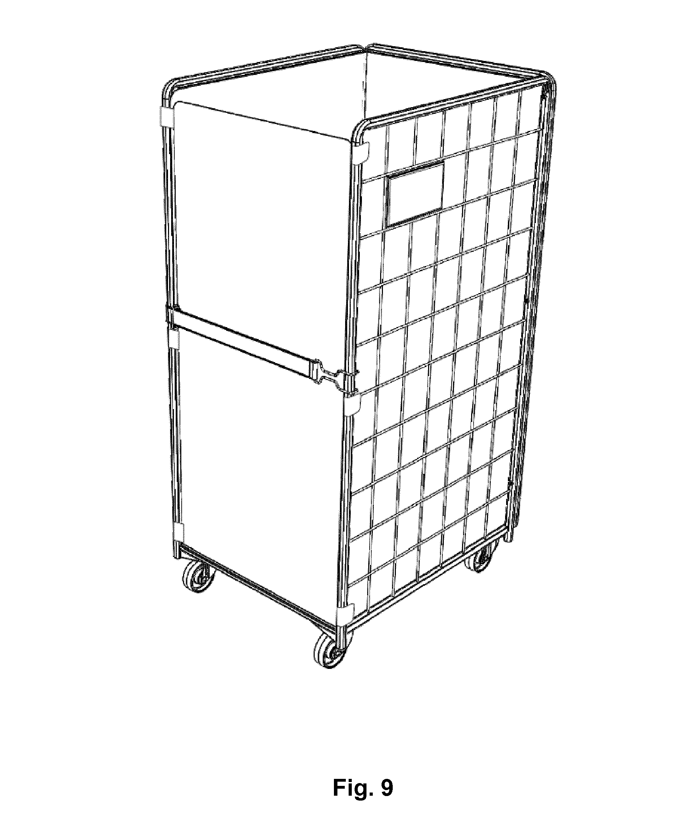

The accessory in figure 7 is a dividable door that is formed of a rectangular planar surface 19 that is divided in two by a horizontal fold line 20. In other words, the door has lower 21 and upper half. Each of the longer, vertical edges of the rectangular planar surface comprises three tongues 15. The operating principle of the door can be shown in figs. 8 and 9. If the upper half of the door is to be kept open, the rectangular planar surface 19 is folded over the horizontal fold line 20 so that the upper half 22 is over the lower half. The tongues 15 of the lower half are bent over the edges of the side walls to keep the door in place on sideways and both of the halves 21, 22 are locked on the opening of the roll container by an elastic strap 10. When the opening is to be closed in whole, the upper half 22 is folded over the opening and the structure is secured by one or more elastic straps 10.

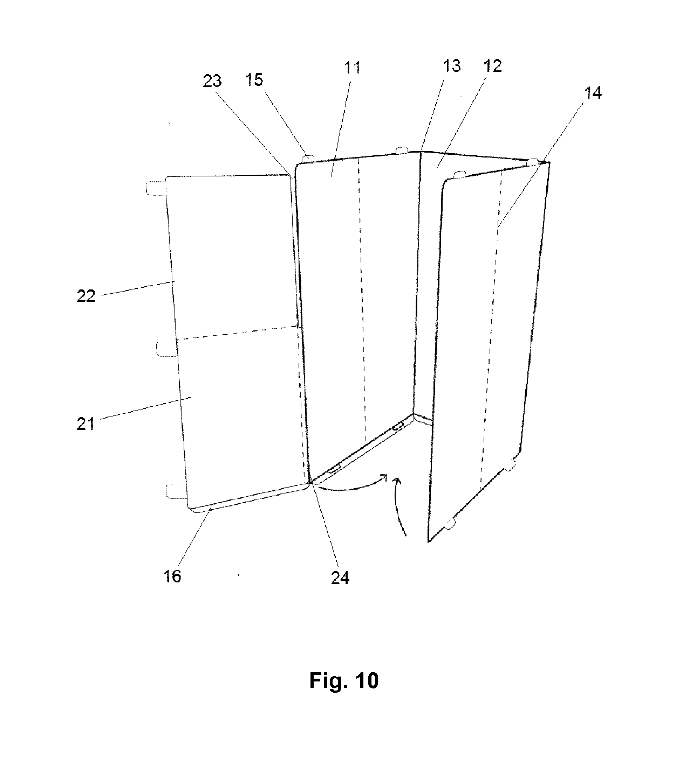

Fig. 10 shows an embodiment wherein the accessories of figs. 5 and 7 are combined. Herein the rectangular planar plane 19 is attached to one of the side wall planes 11 along the edge of the lower half 21 by a vertical joint 24. In order to make it possible to open the upper half 22, it is separated from said side wall plane by a cutout 23. Otherwise the operations and structure of the embodiment is the same as described above when explaining the individual embodiments.

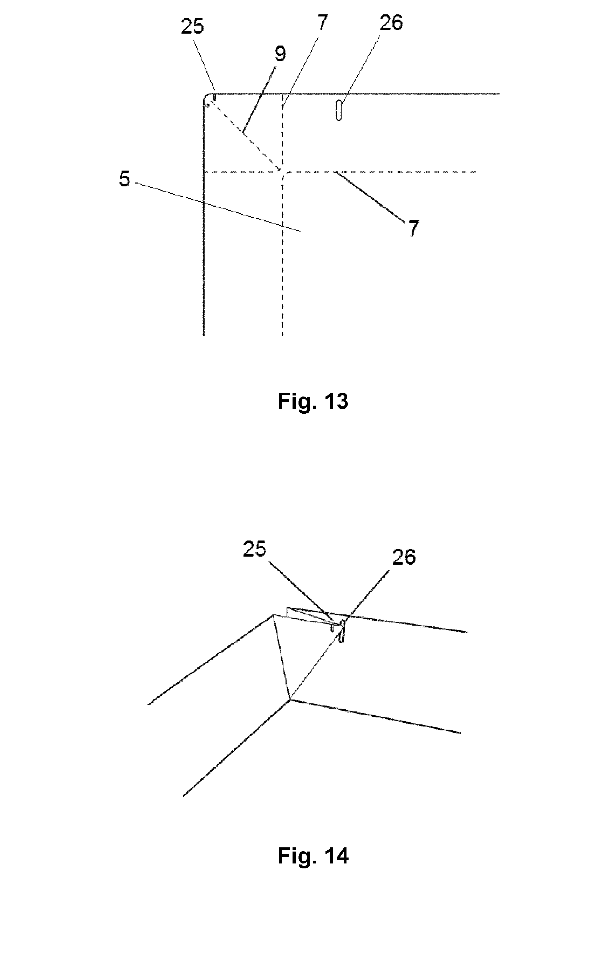

Figs. 13 and 14 show the corner fold of fig. 2 in more detail. Near the corner of the bottom plate 5 are two grooves that open to the edges 8 of the bottom plate 5. On one edge of the bottom plate is a longitudinal hole 26. The distance of the longitudinal hole 26 from the creasing line 7 in the direction along the edge 8 is the same as the distance of grooves 25 from the respective creasing lines. Now, as can be seen from the fig. 14, when the edges 8 of the bottom plate 5 are bent towards the center of the plate, the corner can be folded along the auxiliary creasing line 9 inwards so that the point of the fold can be placed into the rectangular hole 26. The grooves 25 lock the fold.

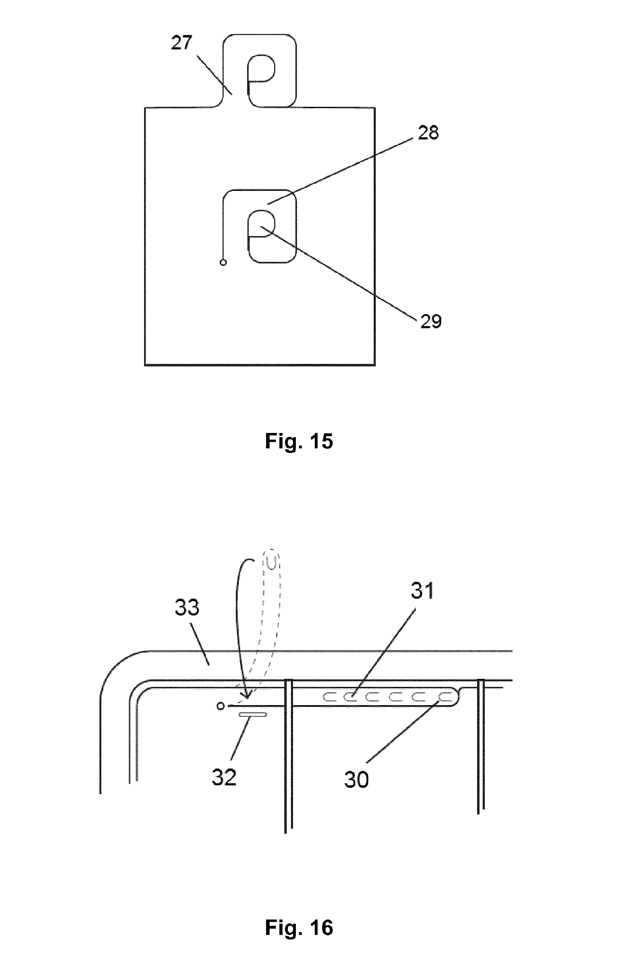

Fig. 15 shows a hook-like means for attaching an accessory to a wire, bar or a tube. It comprises rectangularily formed hook 27, that has a hook body 28 forming a closed loop and a hole 29 in the center of the closed loop. The hook body 28 is cut from the material of a plate or other element so that it is attached to the plate only at the root of the hook body. When cut this way, the hook body 28 can be folded away from the plane of the plate, bent around a longitudinal element such as wire so that the hook 27 locks an accessory to the element. The hook 27 can be formed on the edge of a planar surface or within its edges as can be seen from fig. 15. Of course, the form of the hook may vary.

Figure 16 shows an attachment strip 30 that is cut from an edge of a plate so that one end of the strip is attached to the plate, for example a wall plate 11. On the loose end of the strip is U-formed cuts that form tongue-like elements 31. Further, close to the attached end of the strip 30, opposite to the edge, is a slot 32. Now, the strip can be wound around a frame tube 33 of a container and pushed through the slot 32, whereafter a tongue-like element 31 is lifted from the strip 31. Now the tongue-like element 31 secures the strip 30 so that it can't be drawn back through the slot 32.

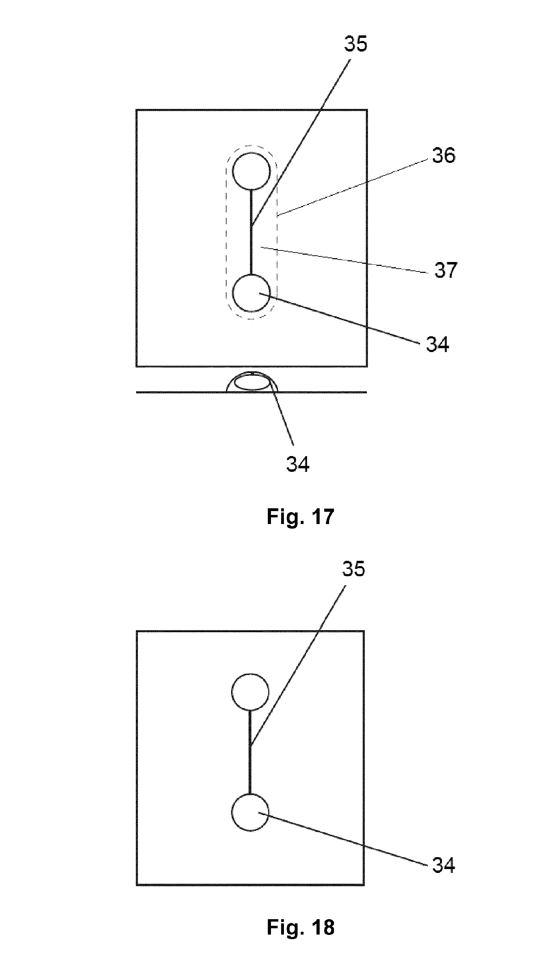

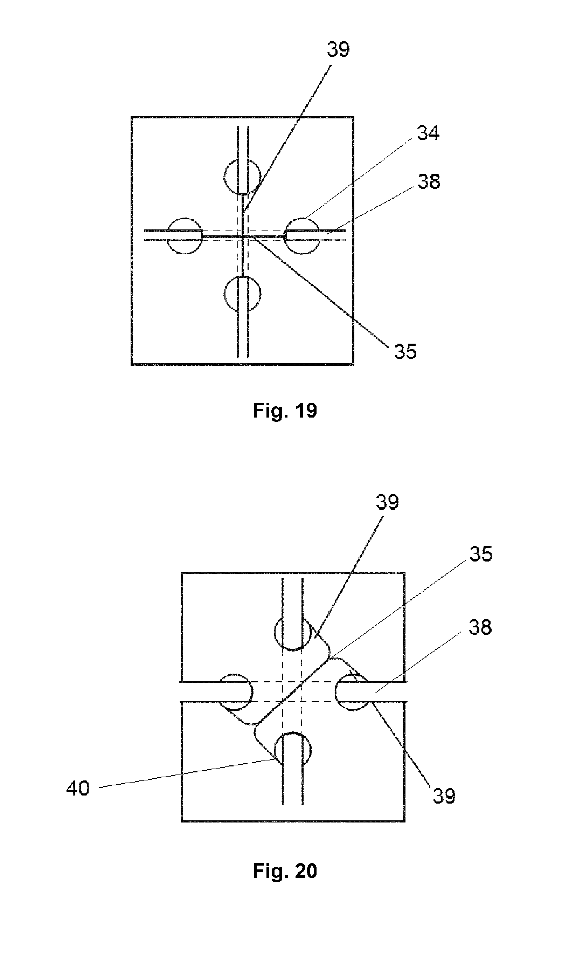

Figure 17 shows an embodiment that is especially suitable for connecting an accessory made of plastic sheet to a wire or similar element. It comprises two circular holes 34 spaced on a distance from each other. The holes are connected by a straight cut 35 and surrounded by an oval creasing line 36. The holes 34 and the straight cut form flaps 37. Now the planar surface of and accessory can be set against a wire mesh wall and length of a wire pushed through the straight cut 35. The oval creasing line 36 allows the surrounding of the circular holes 34 and the flaps 37 to rise slightly. The wire runs now trough the circular holes 34 and the flaps press the planar element against the wire mesh wall. Figure 18 shows a simplified version of this embodiment without the oval creasing line. Figure 19 shows an embodiment suitable for assembling to a crossing of wires 38. This embodiment comprises two straight cuts 35 set in a right angle. The arrangement of the wires 38 through the circular holes 34 can be seen clearly from the fig. 19.

The embodiment in fig. 20 depicts an embodiment wherein four open holes 40 are arranged on a rectangular formation and a cut 35 crosses the rectangle from one edge to the opposite. The cut curves to each of the holes 40 separating two T-shaped flaps 40 from the material of the element (accessory) to be attached to the wires 38. The T-shaped flaps 39 can be set over (or under) the wires 38 thereby securing the accessory to the wire mesh.

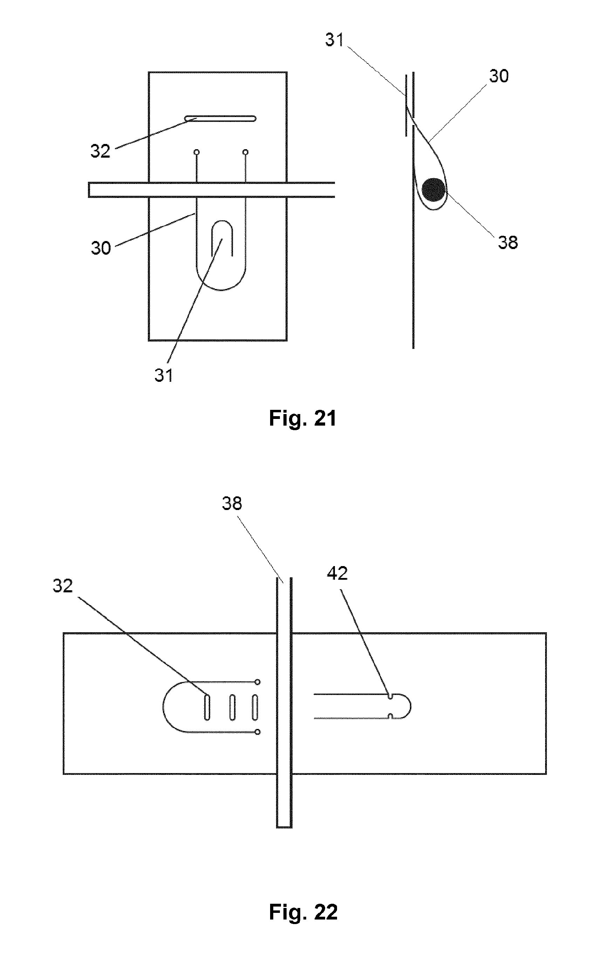

Figures 21 and 22 depict variations of attachment strip 30 of fig. 16 comprising tongue-like locking element 31 and a slot for securing the strip 30 in figure 21. The embodiment in fig. 22 comprises three slots 32 for providing adjustment possibility. The slots are arranged on a detachable strip 41. The slots 32 and the detachable strip operate in combination with a locking tongue 42 that has locking grooves at the end. These elements in figures 21 and 22 can be lifted from the material of the accessory and wound around an elongated object, such a s a wire 38 or a frame tube 33.

The embodiments described above may be altered or modified on various manners by changing their shape or dimensions. However, the means for attachment should be made of the same material and same piece of material as the accessory itself in order to keep the costs affordable.

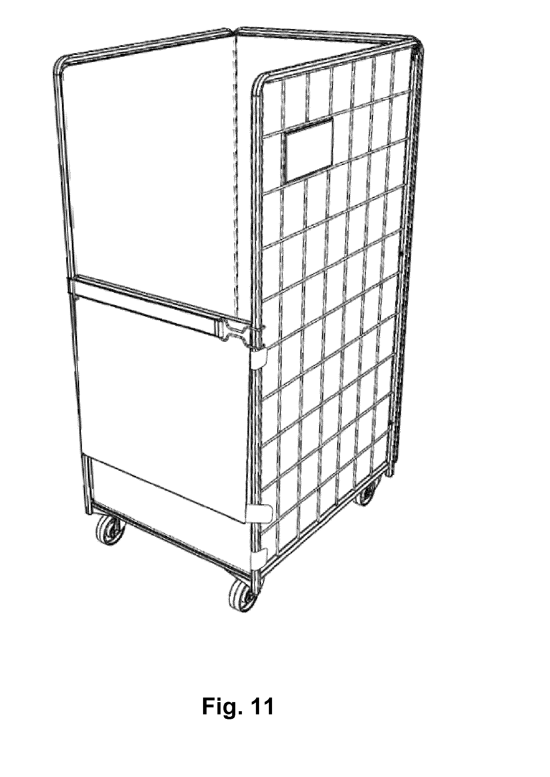

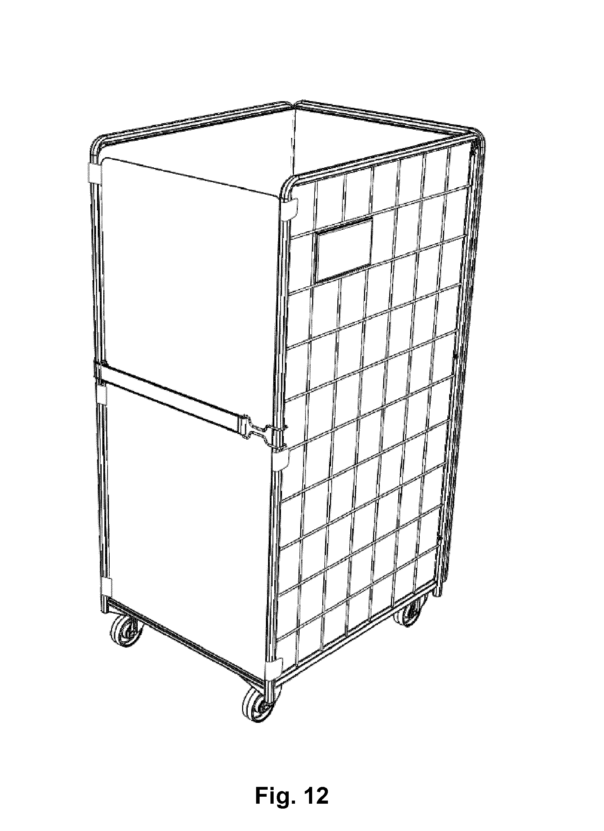

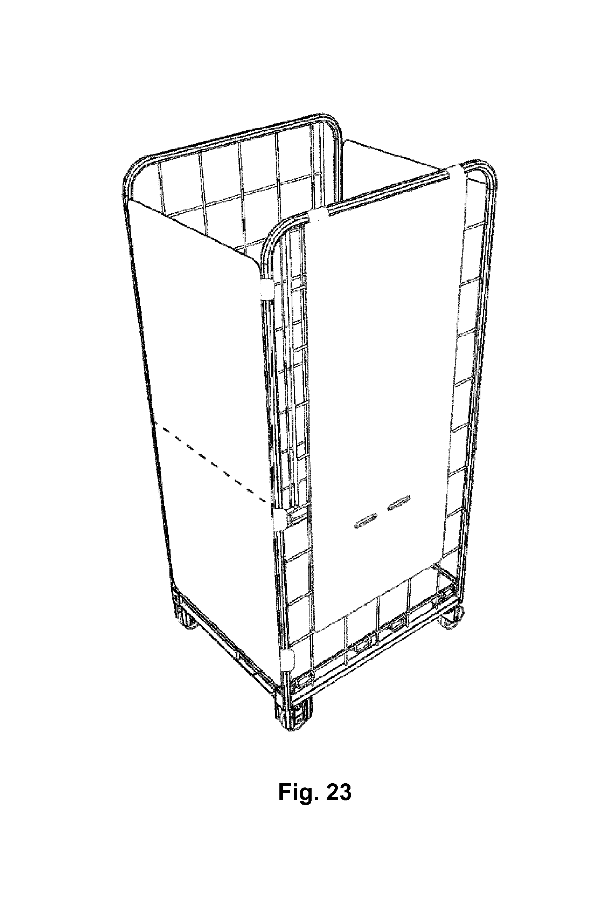

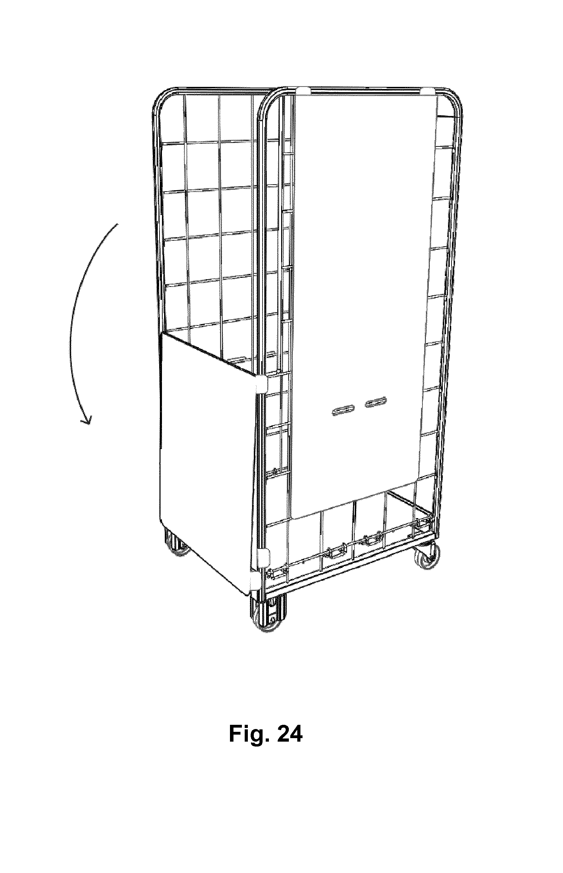

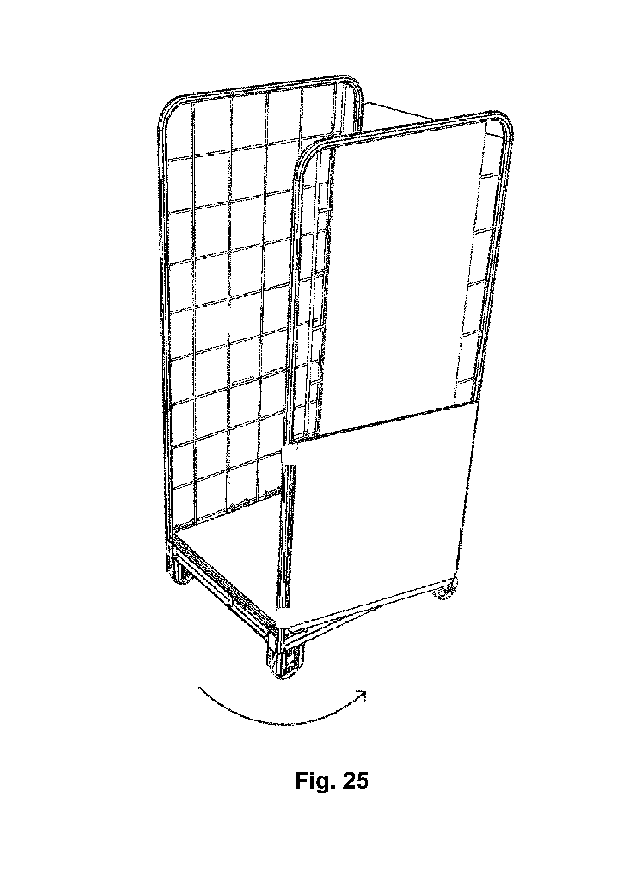

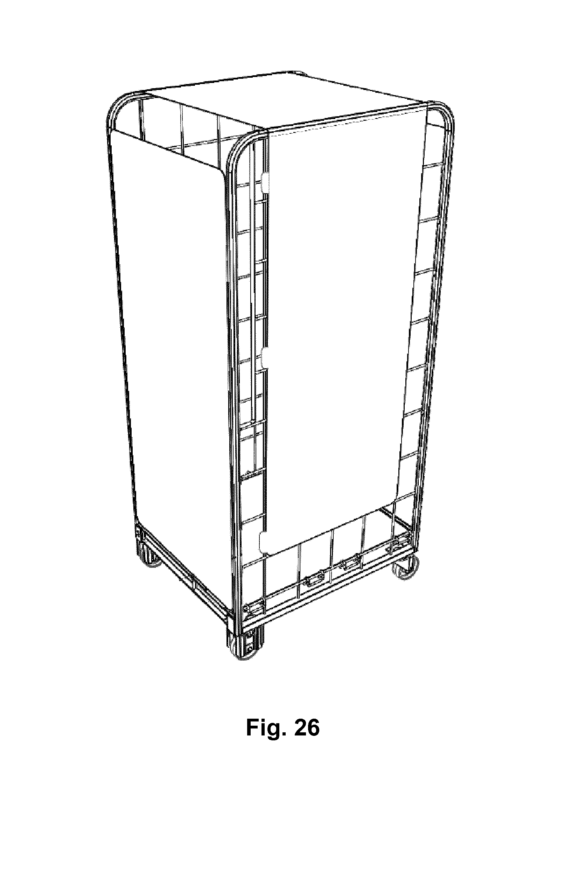

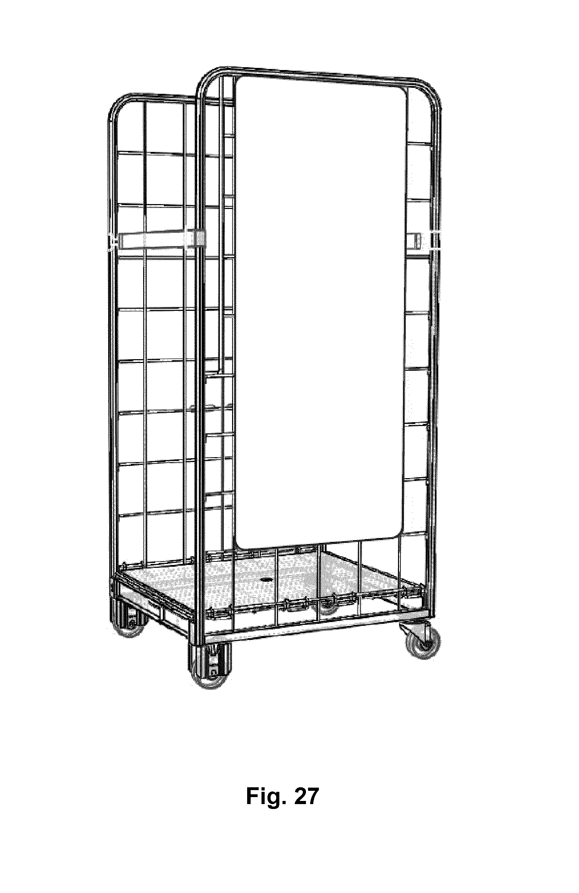

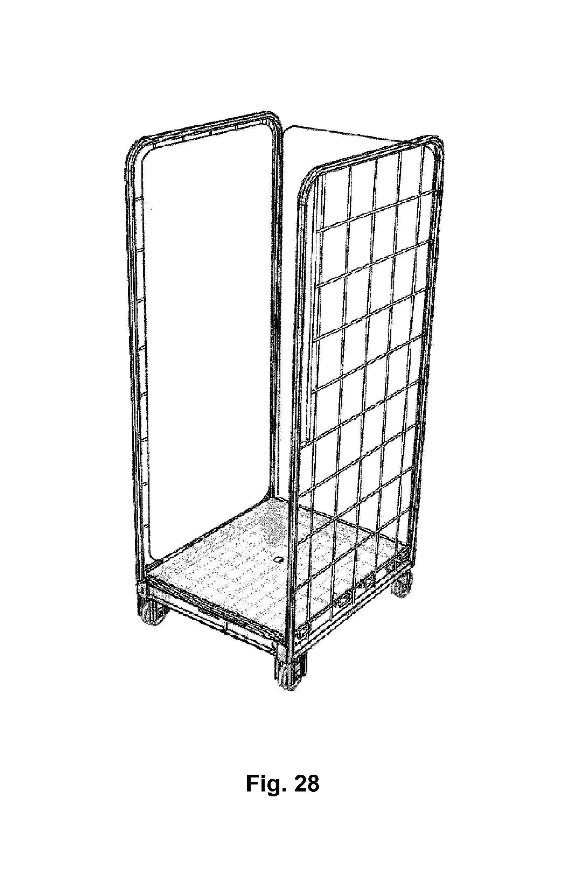

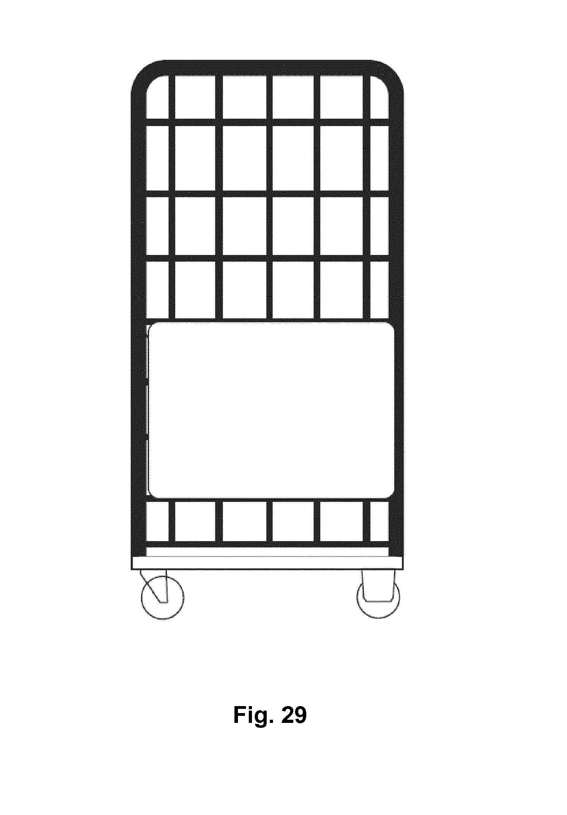

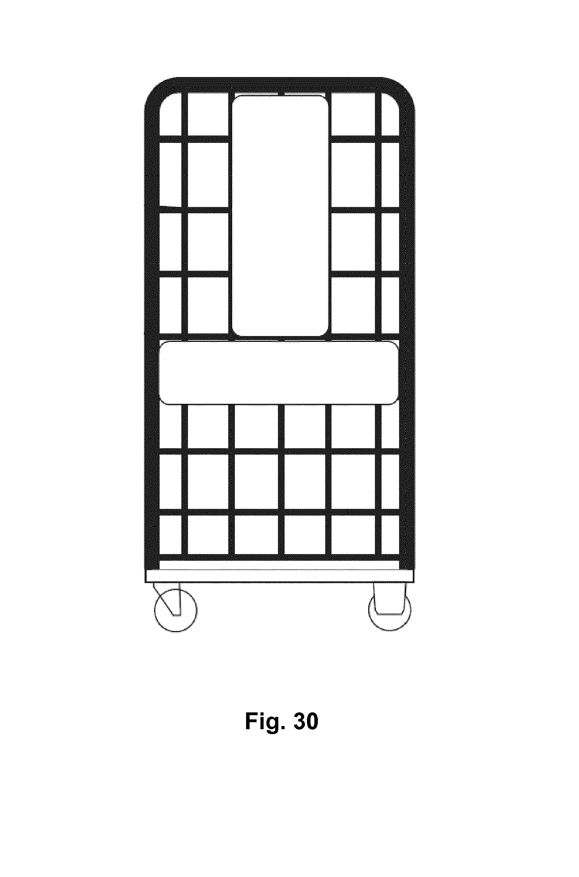

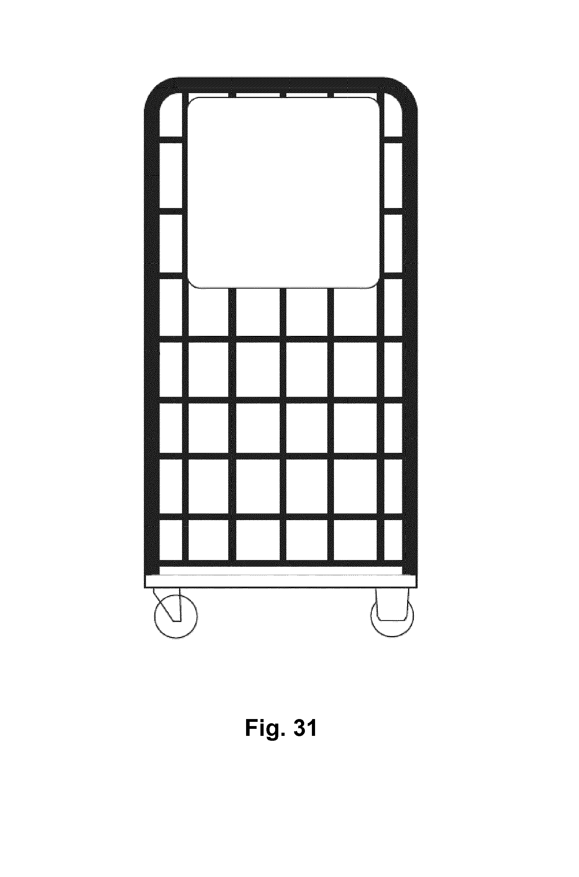

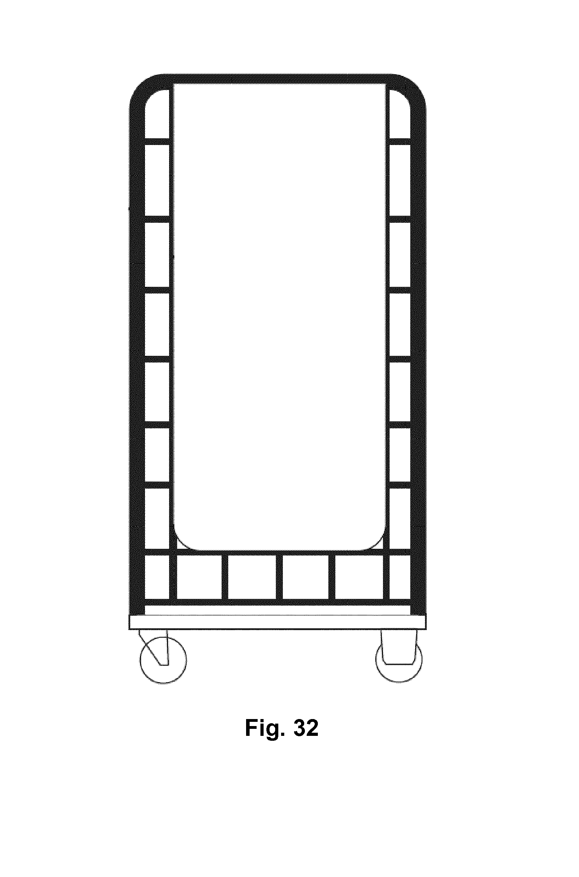

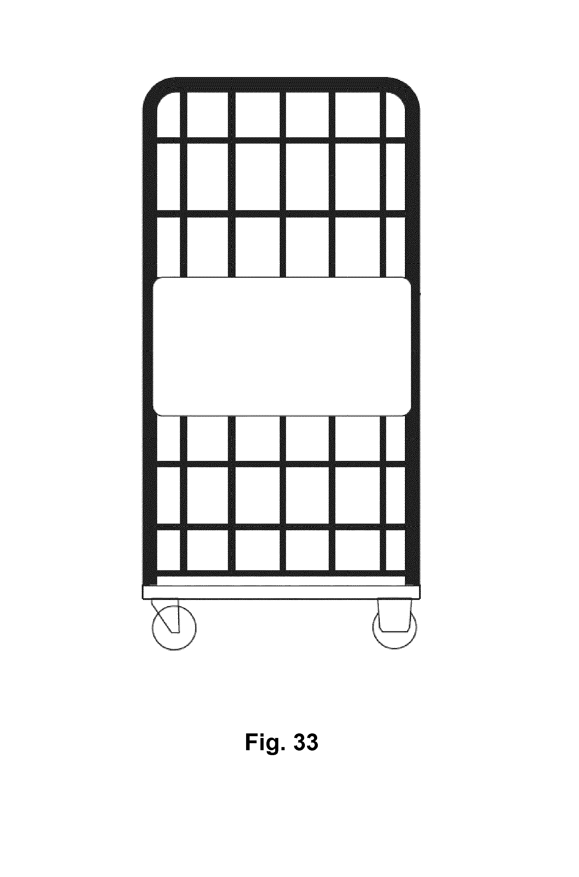

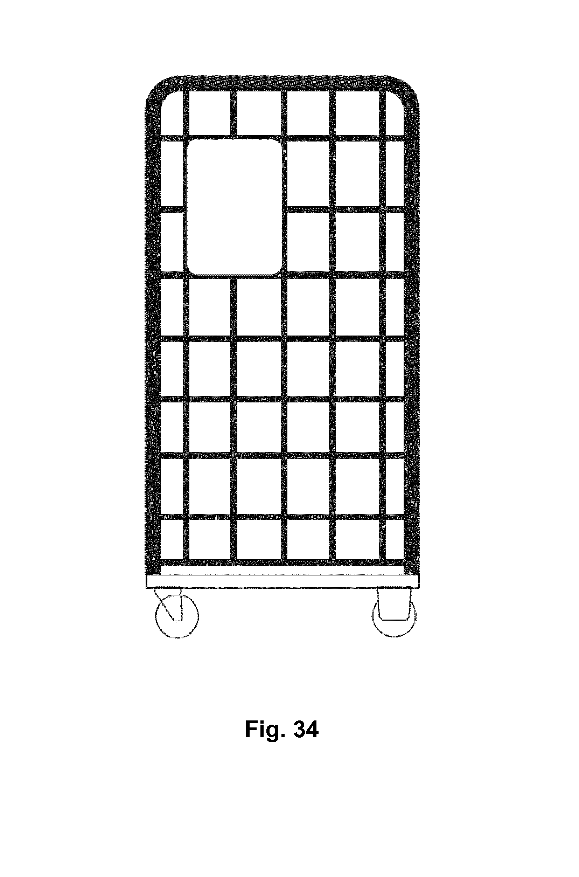

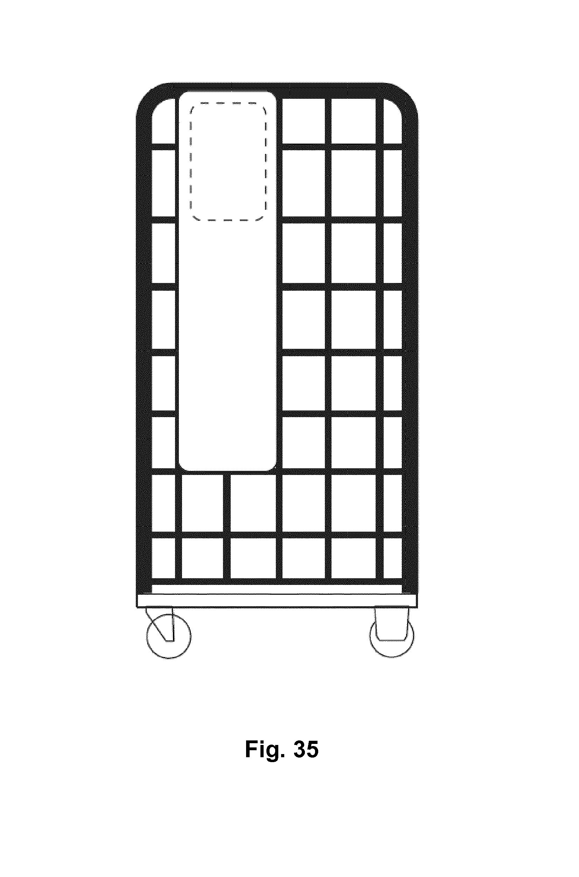

Figures 23 to 35 show various possibilities to use accessories according to the invention. As mentioned earlier, the accessory can be single sheet that can be set inside the roll container in order to protect the goods transported therein or the accessory can be placed outside the container in order to make its appearance more pleasing or for displaying information. The accessory may cover part of the wall of a container or only a part of it. One particularly interesting embodiment is the door shown in figures 23 and 24. The door can be opened in two pieces and used as a separate element or as a part of an accessory as in figures 10 - 12.

In above, the walls of the container are made of frame and mesh infill having quite large openings between the wires. However, the invention is not limited to any specific container structure but can be utilized in nested containers or containers with fixed walls and containers having different wall structure. For example, the roll container may comprise only side walls and a bottom joined by a frame structure without any back wall. The accessory or wall board structure can be attached to the rolling container in several ways using means for attachment described above or their combinations. Usually, it is attached permanently and not removed unless damaged, but naturally, it can be easily removed.

The accessory and the attachment means are made of one piece of material as shown in the exemplifying embodiments.

The material of the accessory can be chosen quite freely from polymer materials. For example, the bottom plane and the support web may be made of plastic honeycomb sheet or similar, however a plain planar sheet having a smooth surface provides affordable price and durable, easy to use and clean material. The accessory may have solid smooth surfaces or comprise small holes or openings or they may be made of meshes or grids having small enough holes to prevent falling of the packages that are handled.

Thus, while there have been shown and described and pointed out fundamental novel features of the invention as applied to a preferred embodiment thereof, it will be understood that various omissions and substitutions and changes in the form and details of the method and device may be made by those skilled in the art without departing from the spirit of the invention. For example, it is expressly intended that all combinations of those elements and which perform substantially the same results are within the scope of the invention. Substitutions of the elements from one described embodiment to another are also fully intended and contemplated. It is also to be understood that the drawings are not necessarily drawn to scale but they are merely conceptual in nature. It is the intention, therefore, to be limited only as indicated by the scope of the claims appended hereto.

### Reference signs list

- 1: back wall
- 2: side wall
- 3: wheel
- 4: bottom
- 5: bottom plate
- 6: planar surface
- 7: creasing, parallel to an edge
- 8: edge
- 9: auxiliary creasing line
- 10: elastic strap
- 11: side wall plane
- 12: back wall plane
- 13: joint
- 14: central fold
- 15: tongue
- 16: edge strip
- 17: straight joint
- 18: cut
- 19: rectangular planar surface
- 20: horizontal fold line
- 21: lower half
- 22: upper half
- 23: cutout
- 24: vertical joint
- 25: groove
- 26: longitudinal hole
- 27: hook
- 28: hook body
- 29: hole
- 30: attachment strip
- 31: tongue-like element
- 32: slot
- 33: frame tube
- 34: circular hole
- 35: straight cut
- 36: oval creasing line
- 37: flap
- 38: wire
- 39: T-shaped flap
- 40: open hole

## Claims

1. Accessory for a roll container comprising at least a frame (33) and side walls (2) and a container bottom (4) mounted on the frame of said roll container,
**characterized in that** the accessory comprises at least one planar surface (6) made of plastic material and includes at least one means for attachment (15) formed of the body of the accessory so that the means for attachment (15) and the accessory are of same piece of material.

2. Accessory according to the claim 1, **characterized in that** the accessory comprises at least two planar surfaces (11, 12) joined through a joint (13) made to the material of the accessory.

3. Accessory according to the claim 1 or 2, **characterized in that** the accessory comprises three walls (11, 13) for covering at least three sides of the container.

4. Accessory according to one of the claims 1 - 3,
**characterized in that** the accessory comprises one planar surface (19) that includes at least one horizontal joint (20).

5. Accessory according to claim 1, **characterized in that** the accessory is a single planar plate having a surface for displaying information and including means for attaching the plate to an outer surface of the container.

6. Accessory according to one of the claims 1 - 5,
**characterized in that** the accessory comprises one planar surface (11) that includes at least one vertical joint (14).

7. Accessory according to claim 1, **characterized in that** the accessory comprises a rectangular planar surface (6) having straight creasing line running parallel to each edge (8) of the planar surface (6), the creasing lines (7) crossing at the edges of the bottom plate (5) continuing to the edges, the straight angle formed by the crossing creasing lines (7) being halved by an auxiliary creasing line (9) so that the edges (8) of the planar surface (6) can be bent towards the center of the surface (6) for forming a trough.
